# EUROPÄISCHE PATENTSCHRIFT

(11) **EP 2 125 353 B1**
(45) Veröffentlichungstag und Bekanntmachung des Hinweises auf die Patenterteilung: **24.11.2010**
(21) Anmeldenummer: 08701502.0
(22) Anmeldetag: 15.01.2008
(51) Int. Cl.: B31B 19/64, B31B 1/72

(54) **VORRICHTUNG UND VERFAHREN ZUR HERSTELLUNG VON KUNSTSTOFFSÄCKEN**
DEVICE AND METHOD FOR THE PRODUCTION OF PLASTIC BAGS
DISPOSITIF ET PROCÉDÉ DE FABRICATION DE SACS EN PLASTIQUE

(30) Priorität: 23.01.2007 DE 102007004244
(43) Veröffentlichungstag der Anmeldung: 02.12.2009
(73) Patentinhaber: Windmöller & Hölscher KG, 49525 Lengerich (DE)
(72) Erfinder: HÄGER, Christian, 48488 Emsbüren (DE); RUBBEL, Christian, 48161 Münster (DE)
(74) Vertreter: Schneider, Bernd
(86) Internationale Anmeldenummer: PCT/EP2008/050393
(87) Internationale Veröffentlichungsnummer: WO 2008/090056

(56) Entgegenhaltungen:
- CH-A5- 595 202
- DE-A1- 2 403 370
- DE-A1- 19 818 720
- GB-A- 789 981
- US-A- 3 481 051
- US-A- 3 576 694
- US-A1- 2002 174 626

## Beschreibung

Die Erfindung betrifft eine Vorrichtung und ein Verfahren zum Verbinden von zumindest zwei Bestandteilen von Säcken oder Schlauchstücken aus Kunststoff mit einem Siegel- und/oder Klebeverfahren.

Es sind Vorrichtungen und Verfahren zur Herstellung von Säcken aus Kunststoff bekannt. Hierbei dienen Schlauchstücke aus Kunststoff oft als Ausgangswerkstücke, welche beispielsweise aus einem beschichteten Kunststoffgewebe bestehen können. Dieses Kunststoffgewebe wird oft aus gereckten Kunststoffbändchen hergestellt, die auf einem Webstuhl zu einem Rundgewebe verwebt werden. Eine andere Möglichkeit ist die Erstellung eines Flachgewebes, welches später durch Zusammenfügen der Längsseiten zu einem Schlauch geformt wird.

Die Beschichtung des Kunststoffgewebes kann auf zwei Arten erfolgen. So können die gereckten Bändchen vor dem Verweben beschichtet werden. Es bietet sich jedoch an, das fertige Gewebe als Ganzes mit einer einseitigen oder zweiseitigen Beschichtung zu versehen.

Der Aufbau des Gewebes aus gereckten Kunststoffbändchen und einer Beschichtung verleiht diesem Material besondere Eigenschaften. Die gereckten Kunststoffbändchen sind sehr reißfest und führen bei einem daraus hergestellten Werkstück zu einer hohen Festigkeit, die aufgrund des Verwebens in alle möglichen Lastrichtungen besteht. Um jedoch verschiedene Bestandteile solcher Werkstücke miteinander verbinden zu können, wird die Beschichtung bereitgestellt, welche stark an den Kunststoffbändchen anhaftet. Durch chemische oder thermische Prozesse können diese Beschichtungen, wenn zwei Bestandteile dieser Schlauchstücke oder Säcke verbunden werden sollen, miteinander verschmolzen werden. Der Versuch, die Kunststoffbändchen direkt mit solchen Prozessen zu verbinden, führt häufig zur Beeinträchtigung der Festigkeit. Dies gilt vor allem, wenn Wärme auf die Kunststoffbändchen einwirkt.

Bei der Herstellung von Säcken aus einem beschichteten Kunststoffgewebe sind Bestandteile, beispielsweise Einschläge bzw. Klappen des späteren Bodens miteinander zu verbinden. Der Herstellungsvorgang läuft folgendermaßen ab: Zunächst wird wenigstens ein Ende eines von einem Schlauch abgetrennten Schlauchstück aufgezogen und ausgestrichen, so dass ein offenes Bodenrechteck und seitliche, dreieckförmige Eckeinschläge entstehen. Anschließend kann ein Ventilzettel oder ein Ventilschlauchstück in den offenen Boden eingelegt werden. Nun wird der Boden verschlossen, indem die Längskanten des Bodenrechtecks, welche nicht an die Eckeinschläge grenzen, eingefaltet und miteinander sowie im Bedarfsfall mit den Eckeinschlägen und/oder mit dem das Ventil bildende Werkstück verbunden. Schließlich kann noch auf dem Boden, um ihm eine noch höhere Festigkeit zu verleihen, ein so genanntes Bodendeckblatt befestigt werden.

Die Druckschrift DE 198 18 720 A1 schlägt vor, zum Verbinden von Bestandteilen von beschichtetem Kunststoffgewebe Heißluft mit definierter Temperatur zu verwenden. Durch die Heißluft wird die Beschichtung plastifiziert beziehungsweise angelöst. Die Wärme wird dabei auf die miteinander zu verbindenden Oberflächen der betreffenden Bestandteile geleitet, wobei eine zu starke Erwärmung des eigentlichen Gewebes zu vermeiden ist. Sodann werden die Oberflächen miteinander in Kontakt gebracht und die Bestandteile miteinander verpresst. Dieses Verpressen erfolgt durch Verpressmittel wie beispielsweise zwei Walzen, die einen Walzenspalt bilden, durch welchen die Bestandteile geleitet werden, solange die Oberflächenbeschichtungen noch plastifiziert sind. Nach dem Erkalten sind die beiden Oberflächen und damit die Bestandteile der Schlauchstücke oder der Säcke fest miteinander verbunden. Dieses Verfahren, bei welchem die angeschmolzenen Oberflächen verbunden werden, wird als Siegelverfahren bezeichnet. Es kann zwischen die zu verbindenden Oberflächen ein Kleber, beispielsweise durch Erhitzen verflüssigter Kunststoff, eingebracht werden.

Nachteilig bei der bekannten Vorrichtung ist jedoch, dass bei einer Aufheizung der Beschichtung des jeweiligen Werkstücks die Durchlaufzeit auf die durch den Heißluftstrom herbeigeführte Energie- bzw. Wärmezufuhr abgestimmt sein muss. Das bedeutet, dass das Werkstück nur so schnell durch die Vorrichtung bewegt werden kann, wie auch die Beschichtung plastifiziert werden kann. Dadurch sind der Leistung, d. h. die Anzahl der hergestellten Säcke pro Zeiteinheit, einer solchen Vorrichtung Grenzen gesetzt.

Die Aufgabe der vorliegenden Erfindung ist es demnach, eine bekannte Vorrichtung derart zu verändern, dass eine höhere Leistung in Bezug auf die Sackherstellung möglich ist.

Die Aufgabe wird durch eine Vorrichtung mit den kennzeichnenden Merkmalen des Anspruch 1 und einem Verfahren mit den kennzeichnenden Merkmalen des Anspruchs 11 gelöst.

Demnach ist eine Vorwärmeinrichtung vorgesehen, mit welcher wenigstens eines der zu verbindenden Bestandteile von Schlauchstücken mit einem erhitzten, gasförmigen Fluid beaufschlagbar ist und auf eine Temperatur gebracht werden kann, die oberhalb der Raumtemperatur liegt. Die Vorwärmeinrichtung ist dabei in der Laufrichtung der Schlauchstücke bzw. der Säcke der Heizeinrichtung vorgeordnet.

Bei diesem Vorwärmvorgang sollten die Bestandteile der Schlauchstücke möglichst nicht auf eine Temperatur oberhalb der Plastifizierungstemperatur gebracht werden. Jedoch ist dieses nicht immer zu vermeiden bzw. es kann sogar erwünscht sein. Das gasförmige Fluid, das zum Vorwärmen der Bestandteile verwendet wird, weist eine Temperatur auf, die wesentlich höher als die Plastifizierungstemperatur liegt, zum Beispiel bei 400 Grad Celsius. Bei einer derartigen Temperatur hängt die Temperatur, auf die letztendlich die Bestandteile aufgeheizt werden, auch von der Verweilzeit der betreffenden Bestandteile im Wirkbereich der Vorwärmvorrichtung ab.

Mit der vorliegenden Erfindung ist es also möglich, den zu verbindenden Bestandteilen schon Wärmeenergie zuzuführen, bevor der eigentliche Verbindungsprozess beginnt. Die Heizeinrichtung braucht den Bestandteilen anschließend nicht mehr so viel Wärme zuzuführen wie in einer Vorrichtung ohne Vorwärmeinrichtung. Die zu verbindenden Bestandteile können die Heizeinrichtung somit schneller durchlaufen, was den Ausstoß einer erfindungsgemäßen Vorrichtung gegenüber einer Vorrichtung nach dem Stand der Technik erhöht. Weitere Vorteile bietet die Erfindung in einer ihrer Ausgestaltungen, wie sie nachfolgend erläutert werden.

In einer vorteilhaften Ausgestaltung der Vorrichtung sind in der Vorwärmeinrichtung Strömungskanäle vorgesehen, die von einem temperiertem Fluid durchströmt werden, wobei das Fluid gasförmig ist. Es versteht sich, dass das Fluid möglichst dicht an die zu verbindenden Oberflächen heranzubringen ist, um einen möglichst guten Wärmeübertrag zu erhalten.

Bei der Verwendung eines gasförmigen Fluids ist es besonders vorteilhaft, dieses Fluid direkt auf die Bestandteile des Schlauchstücks zu leiten. Dazu können die Strömungskanäle Öffnungen aufweisen, mit welchen das Fluid auf die Bestandteile geleitet werden kann. In diesem Fall ist der zu erzielende Wärmeübertrag besonders groß.

In einer vorteilhaften Ausgestaltung umfassen die Strömungskanäle Ausnehmungen, die in zumindest eine den zu temperierenden Bestandteilen zugewandten Oberflächen der Vorwärmeinrichtung, die den zu temperierenden Bestandteilen zugewandt ist, eingearbeitet sind. Dies lässt sich besonders einfach bewerkstelligen, wenn die Vorwärmeinrichtung ein Metallstück, beispielsweise eine quaderförmige Aluminiumplatte umfasst, die mit ihrer größten Außenebene dem Schlauchstück oder dem Sack zugewandt ist.

Von Vorteil ist dabei, wenn die Ausnehmungen gewölbeartig ausgebildet sind. Dies bedeutet, dass der Querschnitt beispielsweise halbkreisförmig sein kann. Unabhängig von der Querschnittsform ist diese Ausnehmung auf der dem Schlauchstück zugewandten Seite der Oberfläche der Vorwärmeinrichtung offen.

In einer weiteren vorteilhaften Ausgestaltung der Erfindung verlaufen die Strömungkanäle quer zur Transportrichtung der Schlauchstücke, so dass das temperierte Fluid möglichst die gesamte Breite mindestens eines Bestandteils eines Schlauchstücks erfasst, welches mit einem weiteren Bestandteil zu verbinden ist.

Zur einfachen Herstellung der Vorwärmeinrichtung können die Strömungskanäle durch einfache Sackloch- oder Durchgangsbohrungen oder Ausfräsungen gebildet sein. In solch einem Fall ist es von Vorteil, wenn separate Verschlussstücke vorgesehen sind, mit welchen die offenen Endbereiche der Strömungskanäle verschließbar sind, so dass durch diese Endbereiche kein Fluid entweichen kann.

Besonders vorteilhaft ist es dabei, wenn die Verschlussstücke innerhalb der Strömungskanäle verschiebbar sind, um den vom dem Fluid durchströmten Bereich der Strömungskanäle an die Ausdehnung der Bestandteile anzupassen, welche zu erwärmen sind. Damit kann einfach verhindert werden, dass auch Bereiche, die nicht zu erwärmen sind, erwärmt und womöglich in Mitleidenschaft gezogen werden. Diese Ausgestaltung der Erfindung verdient besondere Beachtung. Vorrichtungen zur Herstellung von Säcken aus beschichtetem Bändchengewebe, wie sie oben beschrieben ist, sind häufig formatvariabel. Es können insbesondere Säcke produziert werden, deren Böden verschiedene Breiten aufweisen. Dazu umfassen solche Vorrichtungen Verstelleinrichtungen, mit welchen die Abstände der Einrichtungen, welche für das Zuklappen der Bodenlaschen erforderlich sind, beispielsweise Leitbleche, veränderbar sind. In einer erfindungsgemäßen Vorrichtung ist vorgesehen, auch die Verschlussstücke an die Verstelleinrichtungen zu koppeln, so dass bei einer Formatanpassung auch die vom Fluid durchströmten Abschnitte der Strömungskanäle ohne eine separate Bedienung angepasst werden.

Weiterhin sind auf einer Außenoberfläche der Vorwärmeinrichtung zumindest ein erster Hohlkörper und zumindest ein zweiter Hohlkörper vorgesehen, deren Hohlräume über jeweils zumindest eine Verbindungsleitung, beispielsweise eine Bohrung mit zumindest einem der Strömungskanäle kommunizieren. Jeweils ein erster und ein zweiter Hohlkörper können insbesondere über mehrere Strömungskanäle miteinander verbunden sein, wobei letztere parallel zueinander verlaufen können. In diesem Fall ist ein erster Hohlkörper als Verteiler für das Fluid anzusehen. Der entsprechende zweite Hohlkörper dient dann als Sammeleinrichtung für das Fluid.

Gemäß einer weiteren Ausgestaltung der Erfindung ist vorgesehen, jeden Hohlkörper mit einem Anschlussstutzen zu versehen, über den das Fluid den Hohlräumen zugeführt oder aus diesen abgeführt werden kann.

Besonders vorteilhaft ist dabei, wenn der zumindest eine erste Hohlkörper mit einer Überdruckquelle verbunden ist. Mit dieser Maßnahme wird das Fluid insbesondere in den Strömungskanälen mit einer Strömungsrichtung beaufschlagt, so dass das Fluid tatsächlich an dem zu erwärmenden Bestandteil des Schlauchstücks vorbeiströmt und an alle Bereiche desselben Wärme abgibt. Aufgrund des Überdrucks in einem Hohlraum wird ein Druckgefälle hervorgerufen. Dieses Druckgefälle kann vergrößert werden, wenn der zumindest eine zweite Hohlkörper mit einer Unterdruckquelle verbunden ist. Das Fluid, das die Strömungskanäle durchströmt hat, wird dadurch aus der Vorrichtung entfernt und abgeleitet. Das Fluid kann nun keine Restwärme mehr unkontrolliert an die Schlauchstücke oder an die Umgebung abgeben. Damit wird ein Aufheizen der Umgebungsluft im zeitlichen Verlauf der Produktion von Säcken vermieden.

Wenn Bestandteile vorgewärmt werden, die ihrerseits bereits aus zwei Einzelteilen bestehen, wobei das erste Einzelteil das zweite Einzelteil überlappt, ist gemäß der Erfindung vorgesehen, die Strömungsrichtung derart an die Überlappung anzupassen, dass das Fluid zunächst entlang des ersten Einzelteils geführt wird und dann entlang des zweiten. Die Anordnung der Vorwärmeinrichtung ist entsprechend zu wählen. Insbesondere bei der Verwendung von Heißluft als Fluid ist diese Anordnung der Vorwärmeinrichtung von besonderem Vorteil, da ansonsten die Gefahr besteht, dass das aufliegende Einzelteil durch die Luftströmung erfasst und aufgerichtet wird, so dass die nachfolgenden Produktionsschritte nicht ordnungsgemäß ablaufen können.

Weitere Ausführungsbeispiele der Erfindung gehen aus der nun folgenden gegenständlichen Beschreibung und der Zeichnung hervor.

Die einzelnen Figuren zeigen:
- Fig. 1: Seitenansicht einer Arbeitsstation in einer erfindungsgemäßen Vorrichtung
- Fig. 2: Die Figur 2 zeigt eine vergrößerte Ansicht der Vorwärmeinrichtung 20 aus der Figur 1.
- Fig. 3: die Ansicht des Schnitts III-III aus der Figur 2
- Fig. 4: die Ansicht des Schnitts IV-IV aus der Figur 2
- Fig. 5: die Ansicht V-V aus den Figuren 3 bzw. 4
- Fig. 6: perspektivische Ansicht auf eine Vorwärmeinrichtung

Wie bereits in der einleitenden Beschreibung ausführlich dargelegt wurde, sind bei der Herstellung von Säcken aus beschichteten Kunststoffgewebeschläuchen mehrere Verfahrensschritte notwendig. Insbesondere zum Verbinden verschiedener Bestandteile der späteren Säcke sind entsprechende Arbeitsstationen notwendig. Im Einzelnen sind dies: eine Arbeitsstation zum Aufbringen von Ventilzetteln, Arbeitsstationen zum dauerhaften Verschließen der Böden und Arbeitsstationen zum Aufbringen von Bodendeckblättern, die die Böden der Säcke verstärken. Auf den Einsatz von Arbeitsstationen zum Aufbringen der Bodendeckblätter kann gegebenenfalls verzichtet werden. Weitere Arbeitsstationen sind denkbar.

In der Regel sind die Arbeitsstationen doppelt ausgeführt, so dass die entsprechenden Arbeiten gleichzeitig an beiden Enden der Schlauchstücke, welche in der Regel quer zu ihrer Schlauchlängsachse gefördert werden, ausgeführt werden können. Die Anzahl der Arbeitsstationen zum Einbringen der Ventilblätter oder -schläuche kann von dieser Regel, je nach gewünschter Anzahl der Ventile, abweichen.

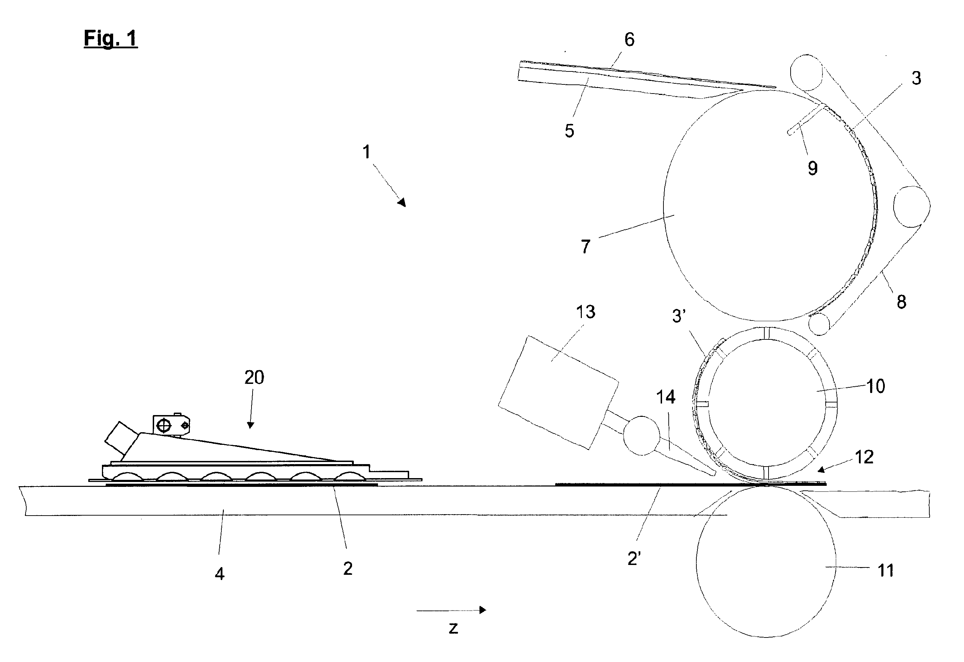

Die Fig. 1 zeigt die Seitenansicht auf eine solche Arbeitsstation 1 in einer erfindungsgemäßen Vorrichtung, bei der es sich um eine Arbeitsstation zum Aufbringen von Bodendeckblättern 3, 3' auf Säcke 2, 2' handelt. Die quer geförderten Säcke 2, 2' liegen dabei auf einem Tisch 4 auf und werden durch ein geeignetes, nicht gezeigtes Transportmittel in Transportrichtung z transportiert. Die bereits zugelegten Böden sind ebenfalls in die Ebene des Tisches gelegt. Die Erfindung ist hierauf jedoch nicht beschränkt, vielmehr können die Böden auch in einer Ebene liegen, die orthogonal zu der Ebene verläuft, die durch die Tischebene aufgespannt wird.

Über einen Zulauf 5 wird der Arbeitstation 1 ein Bahnmaterial 6 zugeführt, von dem die Bodendeckblätter 3, 3' abgetrennt werden. Dazu wird das voraus laufende Ende des Bahnmaterials 6 vom Schneidzylinder 7 und dem Transportband 8 erfasst und vorgezogen und von der im Schneidzylinder 7 integrierten, aber nicht näher gezeigten Schneideinrichtung 9 quer geschnitten. Das so entstandene Bodendeckblatt 3, 3' wird vom Saugzylinder 10 übernommen und auf den Boden des Sackes 2, 2' gelegt. Der Saugzylinder 10 bildet mit dem Gegendruckzylinder 11 einen Walzenspalt 12. Auf diese Weise wird das Bodendeckblatt 3' auf den Sack 2' mit hoher Kraft aufgepresst. In der Figur 1 ist bereits ein Teil des Sackes 2' mit aufliegendem Bodendeckblatt 3' durch den Walzenspalt geführt worden. Einlaufseitig des Walzenspaltes 12 ist ein Heißluftgebläse 13 angeordnet, dessen durch eine Düse 14 gerichteter Heißluftstrom in die Einlaufseite des Walzenspaltes 12 geleitet wird. Die Heißluft verursacht ein Anschmelzen der Beschichtung sowohl auf dem Boden des Sackes 2' als auch auf dem Bodendeckblatt 3'. Dabei werden, wie es der Figur 1 entnehmbar ist, die Beschichtungen der Oberflächen angeschmolzen bzw. plastifiziert, die unmittelbar danach zusammengebracht werden. Das Zusammenbringen der Oberflächen mit dem noch angeschmolzenen Beschichtungsmaterial erfolgt in dem Walzenspalt 12, so dass die Beschichtungen nunmehr eine Zwischenschicht, die als homogen angesehen werden kann, zwischen Bodendeckblatt und Boden bilden, welche die genannten Bestandteile nach dem Auskühlen dauerhaft verbindet.

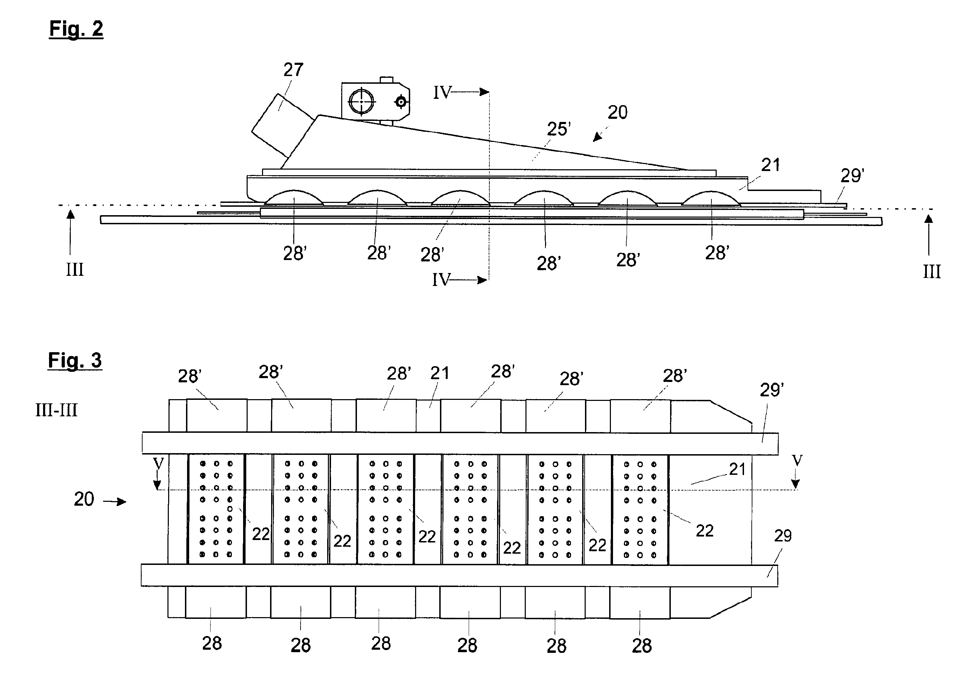

In Transportrichtung z ist dem Heißluftgebläse eine Vorwärmeinrichtung 20 vorgeordnet, welche bereits das nächste Schlauchstück bzw. den nächsten Sack 2 vorwärmt, so dass dem Material des Sacks 2 durch das Heißluftgebläse 13 nicht mehr so viel Wärme bis zur Plastifizierung der Oberflächenbeschichtung zugeführt werden muss, wie es der Fall wäre, wenn der Sack kurz vor dem Einlauf in den Walzenspalt 12 noch Umgebungstemperatur hätte. Auf diese Weise kann die durch die Düse 14 pro Zeiteinheit hindurchgeleitete Heißluftmenge geringer ausfallen und/oder die Temperatur des Heißluftstromes reduziert werden und/oder die Verweilzeit der zu erhitzenden Bestandteile im Heißluftstrom verkürzt werden. Der Aufbau und die Funktion der Vorwärmeinrichtung 20 werden im Folgenden anhand der Figuren 2 bis 6 näher erläutert.

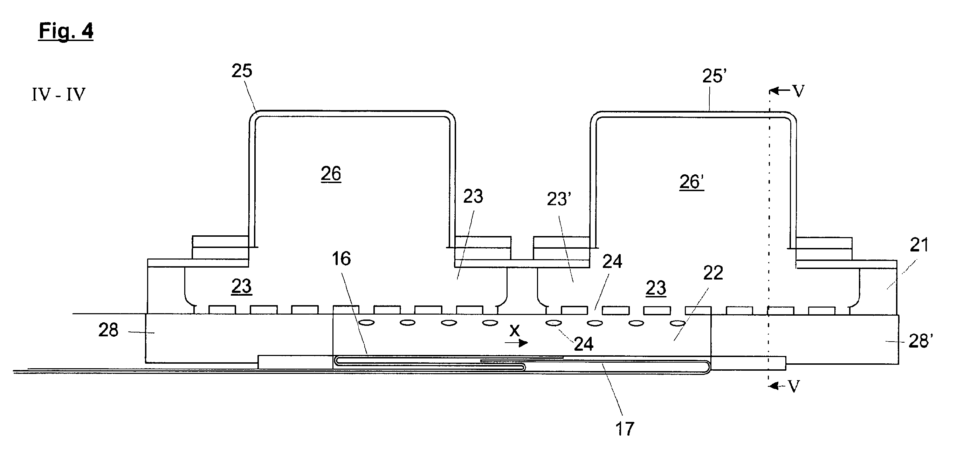

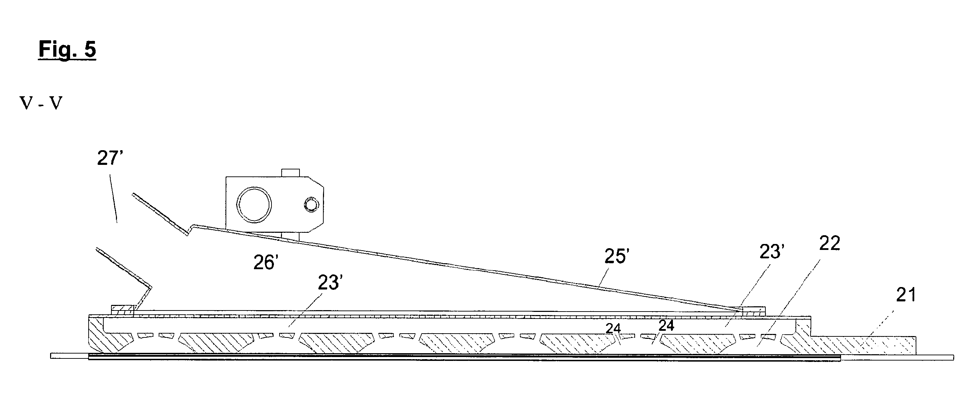

Die Vorwärmeinrichtung 20 umfasst einen plattenförmigen Vollkörper 21, in welchen Strömungskanäle 22 eingearbeitet sind, etwa durch Fräsen und/oder Bohren. Die Oberfläche, in die die Strömungskanäle eingearbeitet sind, ist im Betrieb dem vorzuwärmenden Werkstück, beispielsweise dem Sack 2, zugewandt. Auf der dieser Oberfläche abgewandten Seite des Vollkörpers 21 sind in diesen zumindest zwei längs verlaufenden Ausnehmungen 23, 23' (Figuren 4 und 5) vorgesehen, die eine rechteckige Form aufweisen können. Der Vollkörper 21 kann aus jedem geeigneten Material gefertigt sein, bevorzugt ist allerdings Aluminium.

Die Strömungskanäle 22 sind in dem gezeigten Ausführungsbeispiel gewölbeartig ausgebildet, d. h., ihr Querschnitt ist ein Kreissegment. Die Vorwärmeinheit 20 ist in der gezeigten, erfindungsgemäßen Vorrichtung derart angeordnet, dass die Längsachsen der Strömungskanäle quer zur Transportrichtung z der Schlauchstücke oder der Säcke 2 verläuft. Sie können jedoch auch längs zur Transportrichtung z verlaufen. Über Bohrungen 24 sind die Strömungskanäle 22 mit den Ausnehmungen 23, 23' verbunden, so dass die in die Ausnehmungen eingebrachte Heißluft durch die besagten Bohrungen in die Strömungskanäle strömen und von hier aus direkt auf das betreffende Werkstück einwirken kann.

Den Figuren 4 und 5 ist zu entnehmen, dass die Heißluft durch eine erste Ausnehmung 23 oder durch mehrere erste Ausnehmungen 23 über die Bohrungen 24 in den Strömungskanal einströmt und vom Strömungskanal 22 über weitere Bohrungen 24 in eine zweite Ausnehmung 23' oder mehrere zweite Ausnehmung 23' abströmt. Dem Heißluftstrom wird dabei die genannte Strömungsrichtung, die in der Fig. 4 mit dem Pfeil x gekennzeichnet ist, aufgeprägt, indem an der zumindest einen ersten Ausnehmung 23 ein Überdruck und/oder an der zumindest einen zweiten Ausnehmung 23' ein Unterdruck erzeugt wird.

Die Wahl der Strömungsrichtung erfolgt dabei aufgrund der folgenden Überlegung. Wie bereits beschrieben wurde, überlappen sich verschiedene Bestandteile des Sacks 2, 2'. In der Figur 4 ist zu sehen, dass der erste Bodenabschnitt 16 mit seinem Randbereich auf einem zweiten Bodenabschnitt 17 aufliegt. Es ist daher sinnvoll, die Heißluft vom ersten Bodenbereich in Richtung auf den zweiten Bodenbereich strömen zu lassen. Bei in entgegen gesetzter Heißluftströmung prallt die Heißluft an die Seitenkante der oberen Lage 16 und könnte versuchen, einen Weg unterhalb dieser Lage zu bahnen, so dass diese angehoben würde. Eine eventuell schon zu diesem Zeitpunkt vorhandene Siegelverbindung zwischen der unteren Lage und der oberen Lage, die möglicherweise noch nicht ausreichend ausgekühlt war, könnte dann wieder zerstört werden.

Um die zumindest eine erste Ausnehmung 23 mit Heißluft mit Überdruck beaufschlagen zu können, ist im Randbereich der Ausnehmung 23 des Vollkörpers 21 ein Hohlkörper 25 befestigt, der im Bereich der Ausnehmung offen ist. Ausnehmung 23 und Hohlkörper 25 begrenzen also einen Hohlraum 26. Der Hohlkörper 25 umfasst jedoch noch einen Stutzen 27, über den unter Überdruck stehende Heißluft zuführbar ist.

Analog ist über der zumindest einen zweiten Ausnehmung 23' ein Hohlkörper 25' vorgesehen, so dass die zumindest eine zweite Ausnehmung 23' und der Hohlkörper 25' einen Hohlraum 26' begrenzen. Der Hohlkörper 25' ist ebenfalls mit einem Stutzen 27' bestückt, über den die Heißluft abgeführt werden kann. Dazu ist dieser Stutzen 27' mit einer Unterdruckquelle verbindbar.

Wenn mehrere Ausnehmungen 23 und/oder mehrere Ausnehmungen 23' vorgesehen sind, können selbstverständlich auch mehrere Hohlkörper 25 und/oder mehrere Hohlkörper 25' vorgesehen sein.

Die Strömungskanäle 22 erstrecken sich über die gesamte Breite des Vollkörpers 21 und sind seitlich offen. Um einerseits das Entweichen der Heißluft durch die offenen Seiten zu verhindern, sind Verschlussstücke 28, 28' vorgesehen, die in ihrem Querschnitt, zumindest im Wesentlichen, dem Querschnitt der Strömungskanäle 22 entsprechen. Um nun die Heißluft nur auf die Bereiche wirken zu lassen, die auch mit weiteren Bestandteilen, wie etwa einem Bodendeckblatt 3, 3', verbunden werden sollen, sind diese Verschlussstücke relativ zum Vollkörper 21 bzw. den Strömungskanälen 22 bewegbar. So ist beispielsweise denkbar, dass Verschlussstücke ganze Strömungskanäle ausfüllen, um den entsprechenden Strömungskanal außer Betrieb zu setzen. In dem gezeigten Ausführungsbeispiel sind jedem Strömungskanal 22 zumindest zwei Verschlussstücke 28 und 28' zugeordnet, deren Länge kleiner ist als die Längsausdehnung des betreffenden Strömungskanals 22. Die einzelnen Verschlussstücke 28, 28' sind entlang der Längsrichtung der Strömungskanäle 22 verschiebbar, so dass mit ihnen verschiedene Bohrungen 24 verschlossen werden können. Durch das Verschieben ist es also möglich, die gewünschte Anzahl an Bohrungen 24 frei zu geben, durch welche dann die Heißluft auf das Werkstück gelangen kann. Eine solche Einstellbarkeit ist dann vorteilhaft, wenn die erfindungsgemäße Vorrichtung formatvariabel sein soll, d. h. wenn beispielsweise Säcke mit verschiedenen Ausdehnungen der Böden herstellbar sein sollen.

Zur Vereinfachung und Beschleunigung des beschriebenen Anpassungsvorgangs sind mehrere Verschlussstücke 28 an einer Schiene befestigt. Die Verschiebung eines Verschlussstücks 28 und/oder der Schiene 29 führt zur Verschiebung aller Verschlussstücke 28. Entsprechend sind die Verschlussstücke 28' mit einer Schiene 29' verbunden. Vorteilhaft ist es dabei, wenn die Schienen 29, 29' direkt mit Elementen zur Formateinstellung der gesamten Vorrichtung verbunden sind, so dass eine separate Verschiebung der Verschlussstücke vollständig entfällt. Bei der Formateinstellung der Vorrichtung sind beispielsweise die Abstände der Transporteinrichtungen, welche die Schlauchstücke durch die Vorrichtung und dabei von Arbeitsstation zu Arbeitsstation transportieren, oder auch die Abstände von Leitblechen, mittels welcher etwa die Böden zugelegt werden, einzustellen.

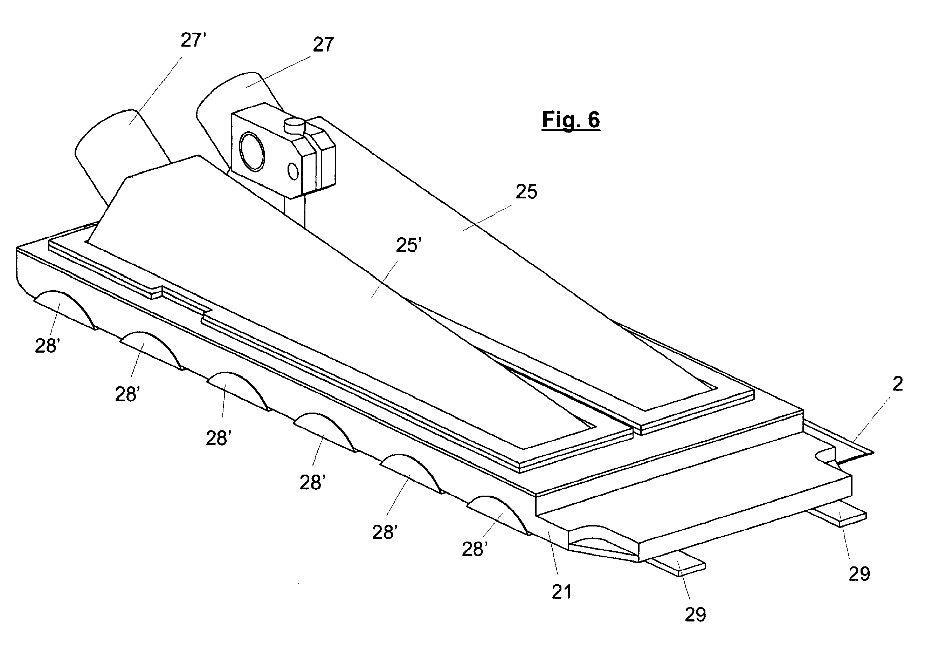

In der Figur 6 ist nochmals eine perspektivische Darstellung der Vorwärmeinrichtung 20 zu sehen.

| **Bezugszeichenliste** | |
|---|---|
| 1 | Arbeitsstation |
| 2, 2' | Sack |
| 3, 3' | Bodendeckblatt |
| 4 | Tisch |
| 5 | Zulauf |
| 6 | Bahnmaterial |
| 7 | Schneidzylinder |
| 8 | Transportband |
| 9 | Schneideinrichtung |
| 10 | Saugzylinder |
| 11 | Gegendruckzylinder |
| 12 | Walzenspalt |
| 13 | Heißluftgebläse |
| 14 | Düse |
| 15 | |
| 16 | erster Bodenabschnitt |
| 17 | zweiter Bodenabschnitt |
| 18 | |
| 19 | |
| 20 | Vorwärmeinrichtung |
| 21 | Vollkörper |
| 22 | Strömungskanal |
| 23, 23' | Ausnehmung |
| 24 | Bohrung |
| 25, 25' | Hohlkörper |
| 26, 26' | Hohlraum |
| 27, 27' | Stutzen |
| 28, 28' | Verschlussstück |
| 29, 29' | Schiene |
| x | Strömungsrichtung der Heißluft |
| z | Transportrichtung der Säcke 2, 2' |

## Patentansprüche

1. Vorrichtung (1) zum Verbinden von zumindest zwei Kunststoff umfassenden Bestandteilen von Säcken (2,2') oder Schlauchstücken mit einem Siegel-und/oder Klebeverfahren, vorzugsweise bei der Herstellung von Säcken (2,2') aus beschichtetem Kunststoffgewebe, welche die folgenden Merkmale umfasst:
- eine Transporteinrichtung, mit welcher die Säcke (2,2') oder Schlauchstücke in einer Laufrichtung (z) transportierbar sind,
- eine Heizeinrichtung (13,14), mit welcher zumindest die zu verbindenden Oberflächen der zumindest zwei Bestandteile bis oberhalb der Plastifizierungstemperatur aufheizbar sind, und
- eine Verpresseinrichtung (10,11,12) zum Zusammendrücken der beiden Bestandteile, weiche sich in Laufrichtung der Schlauchstücke an die Heizeinrichtung anschließt, und mit welcher die zumindest zwei Bestandteile in Kontakt bringbar und/oder zusammendrückbar sind, solange deren Oberflächen noch plastifiziert sind,
**dadurch gekennzeichnet, dass**
eine Vorwärmeinrichtung (20) vorgesehen ist,
- mit welcher wenigstens eines der zumindest zwei Bestandteile der Säcke (2,2') oder Schlauchstücke mit einem erhitzten, gasförmigen Fluid beaufschlagbar und auf eine Temperatur oberhalb der Umgebungstemperatur erwärmbar ist,
- welche in der Laufrichtung (z) der Säcke (2,2') oder der Schlauchstücke vor der Heizeinrichtung (13,14) angeordnet ist, und welche Strömungskanäle (22) umfasst, welche von dem Fluid durchströmt werden, wobei wenigstens ein Endbereich jeweils eines Strömungskanals (22) mit wenigstens einem Verschlussstück (28,28') verschließbar ist, welches (28, 28') innerhalb und entlang der Strömungskanäle verschiebbar ist.

2. Vorrichtung nach einem der vorstehenden Ansprüche,
**dadurch gekennzeichnet, dass**
mittels der Vorwärmeinrichtung (20) ein erhitztes, gasförmiges Fluid direkt auf eines der wenigstens zwei Bestandteile eines Sackes (2,2') oder eines Schlauchstückes leitbar ist.

3. Vorrichtung nach einem der vorstehenden Ansprüche,
**dadurch gekennzeichnet, dass**
die Strömungskanäle (22) in eine den zu erwärmenden Bestandteile der Schlauchstücke zugewandten Oberfläche eingearbeitete Ausnehmungen umfassen.

4. Vorrichtung nach dem vorstehenden Anspruch,
**dadurch gekennzeichnet, dass**
die Ausnehmungen gewölbeartig ausgebildet und in Richtung auf die zu erwärmenden Bestandteile der Schlauchstücke offen sind.

5. Vorrichtung nach einem der vorstehenden Ansprüche,
**dadurch gekennzeichnet, dass**
die Strömungskanäle (22) quer zur Förderrichtung (z) der Säcke (2,2') oder Schlauchstücke verlaufen.

6. Vorrichtung nach einem der vorstehenden Ansprüche,
**dadurch gekennzeichnet, dass**
auf den Bestandteilen der Säcke (2,2') oder Schlauchstücke abgewandten Außenflächen der Vorwärmeinrichtung zumindest ein erster Hohlkörper (25) und zumindest ein zweiter Hohlkörper (25') angeordnet sind, deren Hohlräume (26,26') zumindest mit einem Strömungskanal (22) kommunizieren.

7. Vorrichtung nach vorstehendem Anspruch,
**dadurch gekennzeichnet, dass**
die Vorwärmeinrichtung Leitungen, beispielsweise Durchgangsbohrungen, umfasst, deren ersten Enden in den Strömungskanälen münden und deren zweiten Enden in einen der Hohlräume der Hohlkörper münden.

8. Vorrichtung nach dem vorstehenden Anspruch,
**dadurch gekennzeichnet, dass**
jeder Hohlkörper (25,25') über Anschlussstutzen (27,27') verfügen, über die ein Fluid in den jeweiligen Hohlraum einbringbar oder absaugbar ist.

9. Vorrichtung nach dem vorstehenden Anspruch,
**dadurch gekennzeichnet, dass**
ein erster Hohlkörper (25) mit einer Vorrichtung zum Erhitzen von Fluid verbunden ist, die das erhitzte Fluid mit Überdruck in den entsprechenden Hohlraum (26) einbringt, und ein zweiter Hohlkörper (25') mit einer Unterdruckerzeugungseinrichtung verbindbar ist, die das Fluid absaugt, wobei der erste und der zweite Hohlkörper über zumindest einen Strömungskanal (22) und Leitungen (beispielsweise Bohrungen (24)) miteinander verbunden sind, so dass das Fluid In eine vorgegebene Strömungsrichtung (x) strömt.

10. Vorrichtung nach dem vorstehenden Anspruch,
**dadurch gekennzeichnet, dass,**
wenn die zu erwärmenden Bestandteile aus einem ersten Bestandteil (16) und einem zweiten Bestandteil (17) besteht, wobei das erste Bestandteil (16) das zweite Bestandteil (17) berührend überlappt, die Strömungsrichtung (x) vom
ersten Bestandteil (16) in Richtung des zweiten Bestandteils (17) verläuft.

11. Verfahren zum Verbinden von zumindest zwei Kunststoff umfassenden Bestandteilen von Säcken oder Schlauchstücken mittels Siegeln und/oder Kleben, vorzugsweise bei der Herstellung von Säcken aus beschichtetem Kunststoffgewebe,
- bei dem die Säcke oder Schlauchstücke mit einer Transporteinrichtung in einer Laufrichtung transportiert werden,
- bei dem zumindest die zu siegelnden Oberflächen der zumindest zwei Bestandteile mittels einer Heizeinrichtung bis oberhalb Plastifizierungstemperatur aufgeheizt werden, und
- bei dem die beiden Bestandteile nach dem Aufheizen zusammengedrückt
werden, solange deren Oberflächen noch plastifiziert sind,
**dadurch gekennzeichnet, dass**
zumindest eines der wenigstens zwei Bestandteile der Schlauchstücke mittels einem erhitzten, gasförmigen Fluids auf eine Temperatur oberhalb der Umgebungstemperatur vorgewärmt wird, wobei die Vorerwärmung vorgenommen wird, bevor die Säcke oder die Schlauchstücke die Heizeinrichtung erreichen wobei das Fluid durch Strömungskanäle geleitet wird, wobei wenigstens ein Endbereich eines Strömungskanals (22) mit wenigstens einem Verschlussstück (28, 28') verschlossen ist, welches (28, 28') durch Verschieben innerhalb und entlang der Strömungskanäle in eine gewünschte Postition gebracht wird.

12. Verfahren nach dem vorstehenden Anspruch,
**dadurch gekennzeichnet, dass**
zumindest eines der wenigstens zwei Bestandteile der Schlauchstücke mittels dem erhitzten, gasförmigen Fluid auf eine Temperatur unterhalb der Plastifizierungstemperatur erwärmt wird.

## Claims

1. Apparatus (1) by means of which at least two plastias-Cantaining constituent parts of bags (2, 2') or flexible-tube pieces are connected using a sealing and/or adhesive-bonding method, preferably in the production of bags (2, 2') made of coated woven plastics fabric, and which comprises the following features:
- a transporting device, by means of which the bags (2, 2') or flexible-tube pieces can be transported in a running direction (z),
- a heating device (13, 14), by means of which at least those surfaces of the at least two constituent parts which are to be connected can be heated up to above the plastification temperature, and
- a pressing device (10, 11, 12) which is intended for pressing together the two constituent parts, which follows the heating device, as seen in the running direction of the flexible-tube pieces, and by means of which the at least two constituent parts can be brought into contact and/or pressed together as long as the surfaces thereof are still plastified,
**characterized by**
the provision of a pre-heating device (20)
- by means of which at least one of the at least two constituent parts of the bags (2, 2') or flexible-tube pieces can be subjected to the action of a heated, gaseous fluid and can be heated to a temperature above the ambient temperature,
- which is arranged upstream of the heating device (13, 14), as seen in the running direction (z) of the bags (2, 2') or of the flexible-tube pieces, and which comprises flow channels (22) through which the fluid flows, it being possible for at least one end region of a respective flow channel (22) to be closed by means of at least one closure piece (28, 28'), which can be displaced within and along the flow channels.

2. Apparatus according to Claim 1, **characterized in that**, by means of the pre-heating device (20), a heated, gaseous fluid can be channelled directly to one of the at least two constituent parts of a bag (2, 2') or a flexible-tube piece.

3. Apparatus according to one of the preceding claims, **characterized in that** the flow channels (22) comprise recesses which are made in a surface which is directed towards those constituent parts of the flexible-tube pieces which are to be heated.

4. Apparatus according to the preceding claim, **characterized in that** the recesses are of arch-like design and are open in the direction of those constituent parts of the flexible-tube pieces which are to be heated.

5. Apparatus according to one of the preceding claims, **characterized in that** the flow channels (22) run transversely to the conveying direction (z) of the bags (2, 2') or flexible-tube pieces.

6. Apparatus according to one of the preceding claims, **characterized in that** at least one first hollow body (25) and at least one second hollow body (25') are arranged on outer surfaces of the pre-heating device, these outer surfaces being directed away from the constituent parts of the bags (2, 2') or flexible-tube pieces, and the cavities (26, 26') of these hollow bodies communicate at least with one flow channel (22).

7. Apparatus according to the preceding claim, **characterized in that** the pre-heating device comprises lines, for example through-bores, of which the first ends open out into the flow channels and the second ends open out into one of the cavities of the hollow bodies.

8. Apparatus according to the preceding claim, **characterized in that** each hollow body (25, 25') has connectors (27, 27') via which a fluid can be introduced into the respective cavity or extracted by suction therefrom.

9. Apparatus according to the preceding claim, **characterized in that** a first hollow body (25) is connected to a fluid-heating apparatus which introduces the heated fluid with positive pressure into the corresponding cavity (26), and a second hollow body (25') can be connected to a negative-pressure generator which extracts the fluid by suction, the first and the second hollow bodies being connected to one another via at least one flow channel (22) and lines (for example bores (24)), and therefore the fluid flows in a predetermined flow direction (x).

10. Apparatus according to the preceding claim, **characterized in that**, if the constituent parts which are to be heated comprise a first constituent part (16) and a second constituent part (17), the first constituent part (16) overlapping the second constituent part (17) in contact therewith, the flow direction (x) runs from the first constituent part (16) in the direction of the second constituent part (17).

11. Method of connecting at least two plastics-containing constituent parts of bags or flexible-tube pieces by means of sealing and/or adhesive bonding, preferably in the production of bags made of coated woven plastics fabric,
- in the case of which the bags or flexible-tube pieces are transported in a running direction by means of a transporting device,
- in the case of which at least those surfaces of the at least two constituent parts which are to be sealed are heated up to above the plastification temperature by means of a heating device, and
- in the case of which the two constituent parts, once heated up, are pressed together as long as the surfaces thereof are still plastified, **characterized in that** at least one of the at least two constituent parts of the flexible-tube pieces is preheated to a temperature above the ambient temperature by means of a heated, gaseous fluid, pre-heating taking place before the bags or the flexible-tube pieces reach the heating device, the fluid being channelled through flow channels and at least one end region of a flow channel (22) being closed by means of at least one closure piece (28, 28'), which is moved into a desired position by displacement within and along the flow channels.

12. Method according to the preceding claim, **characterized in that** at least one of the at least two constituent parts of the flexible-tube pieces is heated to a temperature below the plastification temperature by means of the heated, gaseous fluid.

## Revendications

1. Dispositif (1) pour l'assemblage de au moins deux composants, comprenant du plastique, de sacs (2, 2') ou de bouts de flexible avec un procédé de scellement et/ou un procédé de collage, de préférence pour la fabrication de sacs (2, 2') à partir de tissu plastique recouvert, qui comporte les caractéristiques suivantes:
- un dispositif de transport, avec lequel les sacs (2, 2') ou bouts de flexible peuvent être transportés dans un sens de marche (z),
- un système de chauffage (13, 14), avec lequel au moins les surfaces à relier des au moins deux composants peuvent être chauffés jusqu'au-dessus de la température de plastification, et
- un dispositif de pressage (10, 11, 12) pour la compression des deux composants, qui se raccordent dans le sens de marche des bouts de flexible au système de chauffage, et avec lequel les au moins deux composants peuvent être amenés en contact et/ou comprimés ensemble, aussi longtemps que leurs surfaces sont encore plastifiées,
**caractérisé en ce que**
un dispositif de préchauffage (20) est prévu,
- avec lequel au moins l'un des au moins deux composants des sacs (2, 2') ou bouts de flexible peut être sollicité avec un fluide réchauffé et gazeux et qui peut être chauffé à une température au-dessus de la température ambiante,
- qui est disposé dans le sens de marche (z) des sacs (2, 2') ou des bouts de flexible avant le système de chauffage (13, 14), et qui comprend des canaux d'écoulement (22), qui sont traversés par le fluide, au moins une zone d'extrémité de respectivement un canal d'écoulement (22) pouvant être fermée avec au moins un bout de fermeture (28, 28'), lequel (28,28') peut coulisser à l'intérieur et le long des canaux d'écoulement.

2. Dispositif selon l'une quelconque des revendications précédentes,
**caractérisé en ce que**
un fluide réchauffé et gazeux peut être acheminé au moyen du dispositif de préchauffage (20) directement sur l'un des au moins deux composants d'un sac (2, 2') ou d'un bout de flexible.

3. Dispositif selon l'une quelconque des revendications précédentes,
**caractérisé en ce que**
les canaux d'écoulement (22) comportent des évidements intégrés dans une surface tournée vers les composants à réchauffer des bouts de flexible.

4. Dispositif selon la revendication précédente, **caractérisé en ce que**
les évidements sont conçus en forme de voûte et sont ouverts en direction des composants à réchauffer des bouts de flexible.

5. Dispositif selon l'une quelconque des revendications précédentes,
**caractérisé en ce que**
les canaux d'écoulement (22) sont agencés transversalement au sens de transport (z) des sacs (2, 2') ou des bouts de flexible.

6. Dispositif selon l'une quelconque des revendications précédentes,
**caractérisé en ce que**
au moins un premier corps creux (25) et au moins un second corps creux (25') sont disposés sur les surfaces extérieures, opposées aux composants des sacs (2, 2') ou des bouts de flexible, du système de préchauffage, corps creux dont les cavités (26, 26') communiquent au moins avec un canal d'écoulement (22).

7. Dispositif selon la revendication précédente, **caractérisé en ce que**
le dispositif de préchauffage comprend des conduites, par exemple des perçages de passage, dont les premières extrémités débouchent dans les canaux d'écoulement et dont les secondes extrémités débouchent dans l'une des cavités des corps creux.

8. Dispositif selon la revendication précédente, **caractérisé en ce que**
chaque corps creux (25, 25') dispose de tubulures de raccordement (27, 27') par lesquelles un fluide peut être introduit ou aspiré dans la cavité respective.

9. Dispositif selon la revendication précédente, **caractérisé en ce que**
un premier corps creux (25) est relié à un dispositif pour le réchauffement de fluide, qui introduit le fluide réchauffé avec surpression dans la cavité (26) correspondante, et un second corps creux (25') peut être relié à un dispositif de génération de dépression, lequel aspire le fluide, le premier et le second corps creux étant reliés l'un à l'autre au moyen d'un canal d'écoulement (22) et de conduites (par exemple perçages (24)), de sorte que le fluide s'écoule dans une direction d'écoulement (x) prédéfinie.

10. Dispositif selon la revendication précédente, **caractérisé en ce que,**
lorsque les composants à réchauffer sont constitués d'un premier composant (16) et d'un second composant (17), le premier composant (16) recouvrant par contact le second composant (17), le sens d'écoulement (x) va du premier composant (16) en direction du second composant (17).

11. Procédé pour relier au moins deux composants, comprenant du plastique, de sacs ou de bouts de flexible par scellement et/ou collage, de préférence pour la fabrication de sacs à base de tissu plastique revêtu,
- dans lequel les sacs ou bouts de flexible sont transportés avec un dispositif de transport dans un sens de marche,
- dans lequel au moins les surfaces sceller des au moins deux composants sont réchauffés au moyen d'un système de chauffage jusqu'au-dessus de la température de plastification, et
- dans lequel les deux composants sont comprimés ensemble après le réchauffement, aussi longtemps que leurs surfaces sont encore plastifiées,
**caractérisé en ce que**
au moins l'un des au moins deux composants des bouts de flexible est réchauffé au moyen d'un fluide réchauffé et gazeux à une température supérieure à la température ambiante, le préchauffage étant effectué avant que les sacs ou les bouts de flexible atteignent le dispositif de chauffage, le fluide étant acheminé par des canaux d'écoulement, au moins une zone d'extrémité d'un canal d'écoulement (22) étant fermée avec au moins un bout de fermeture (28, 28'), lequel (28, 28') est amené par déplacement à l'intérieur et le long des canaux d'écoulement dans une position souhaitée.

12. Procédé selon la revendication précédente, **caractérisé en ce que**
au moins l'un des au moins deux composants des bouts de flexible est réchauffé au moyen du fluide réchauffé et gazeux à une température inférieure à la température de plastification.
